# EUROPEAN PATENT SPECIFICATION

(11) **EP 0 634 802 B1**
(45) Date of publication and mention of the grant of the patent: **14.01.1998**
(21) Application number: 94905861.4
(22) Date of filing: 08.02.1994
(51) Int. Cl.: H01M 2/16

(54) **DIAPHRAGM FOR CELL, AND CELL**
DIAPHRAGMA FÜR ZELLE UND ZELLE
DIAPHRAGME POUR PILE, ET PILE

(30) Priority: 09.02.1993 JP 21130/93
(43) Date of publication of application: 18.01.1995
(73) Proprietor: SUMITOMO ELECTRIC INDUSTRIES, LTD., Osaka-shi, Osaka 541 (JP)
(72) Inventor: SAKAMOTO, Takeshi, Osaka Wks. of Sumitomo E. I. L., Osaka-shi, Osaka 554 (JP); HARA, Koji, Osaka Works of Sumitomo E. I. L., Osaka-shi, Osaka 554 (JP); HARADA, Akira, Osaka Works of Sumitomo E. I. L., Osaka-shi, Osaka 554 (JP)
(74) Representative: Herrmann-Trentepohl, Werner, Dipl.-Ing.
(86) International application number: PCT/JP94/00182
(87) International publication number: WO 94/18711

(56) References cited:
- WO-A-91/19326
- JP-A- 3 059 947
- JP-A- 3 062 449
- JP-A- 3 283 259
- JP-A- 3 291 848

## Description

### Technical Field

The present invention relates to a battery diaphragm and a battery, and more particularly, it relates to a battery which is excellent in battery characteristics and safety and a diaphragm therefor.

### Background Technique

In recent years, capacities and outputs are increased in primary and secondary batteries such as an alkaline manganese battery, a nickel-cadmium battery, a nickel-hydrogen battery, and a lithium battery, and application ranges thereof are now being abruptly widened.

Following this, a safety hazard in an abnormal state has been highlighted as to these batteries. Particularly in the lithium battery which is widely applied to electronics or the like, the temperature of the battery may abruptly rise to increase the internal pressure if an overcharge or an external short is caused by discrepancy in handling, leading to spouting of an electrolyte.

In order to prevent occurrence of an abnormal state caused by such an external short or the like, there has generally been studied a method of increasing resistance of a diaphragm for suppressing a short-circuit current, thereby inhibiting heat generation. As a concrete example of such a method, there has been developed a technique of insulating the diaphragm at a temperature of not more than 180°C, which is the melting point of lithium, and extremely increasing internal resistance of the battery, thereby suppressing a short-circuit current and inhibiting heat generation as described below, for example.

Japanese Patent Publication No. 5-16139 (Japanese Patent Laying-Open No. 60-52) discloses a diaphragm consisting of polypropylene nonwoven fabric having a surface which is previously impregnated with polyethylene fine powder. When a battery employing such a diaphragm is heated, polyethylene is melted to block pores of the diaphragm. Consequently, ion permeability of the diaphragm is extremely reduced, to suppress temperature rise of the battery.

On the other hand, Japanese Patent Laying-Open No. 3-283259 discloses a battery employing a diaphragm comprising a synthetic resin fine porous film having at least one surface covered with a polymer powder aggregate such as a polyethylene powder aggregate, for example, having a softening temperature of 95 to 160°C.

Further, Japanese Patent Laying-Open No. 3-291848 also discloses a battery employing a diaphragm comprising a synthetic resin fine porous film which is covered with a resin porous powder aggregate. This powder aggregate has a softening point of 95 to 160°C, and contains 1 to 50 wt.% of particles of 0.01 to 1 µm in particle size.

In addition to such a diaphragm carrying resin particles, a diaphragm of a multilayer structure consisting of a first layer which enters a non-porous state at 80 to 150°C and a second layer maintaining its shape at a temperature which is higher by 10°C than that temperature is disclosed in Japanese Patent Publication No. 4-38101, for example.

In addition, a lithium battery employing a polyolefin porous film as the diaphragm is also developed. When a short-circuit test is made as to this battery, pores are blocked by shape change of the diaphragm. Consequently, ion permeability of the diaphragm is remarkably reduced and temperature rise of the battery is suppressed.

However, it has been clarified that the aforementioned conventional safety settlement means have the following problems, although the effects thereof are certainly recognized:

Namely, in the lithium battery employing a polyolefin porous film as the diaphragm, for example, temperature rise is suppressed by shape change of the diaphragm in a short-circuit test, as hereinabove described. However, heating may be caused on the contrary since the diaphragm may be broken due to reduction in strength when a base material for the diaphragm itself is shape-changed, to cause an internal short.

When the battery employing a diaphragm consisting of polypropylene nonwoven fabric having a surface which is previously impregnated with polyethylene fine powder is heated, further, polyethylene is melted and ion permeability of the diaphragm is remarkably reduced as described above. In this diaphragm, however, the pore size is so large that the pores cannot be completely blocked since the diaphragm has a base material of nonwoven fabric. Further, safety over time in insulation is so insufficient that the insulated state is not necessarily maintained until the battery is cooled, and hence the temperature is not reduced in the interior of the battery to cause a problem in practice.

In order to improve safety in an abnormal state of the battery, on the other hand, a method of insulating the diaphragm for increasing internal resistance of the battery is considered in general as hereinabove described, for example. In a nonaqueous electrolytic battery such as a lithium battery, however, it is important to suppress internal resistance in order to improve battery performance, particularly energy efficiency and boosting charge/discharge characteristics.

In this point, the polyethylene powder is disadvantageously dissolved in the electrolyte during long-term preservation in the battery according to the invention of Japanese Patent Laying-Open No. 3-283259, and the capacity is so deteriorated that high battery performance cannot be attained although the reason for this is not clarified. Namely, carried resin particles are disadvantageously dissolved in the organic electrolyte after preservation over a long time or employment at a high temperature, and hence safety in an abnormal state cannot be ensured.

### Disclosure of the Invention

An object of the present invention is to provide a battery diaphragm and a battery, which can solve the aforementioned problems, keep high battery performance in normal employment, and ensure safety in an abnormal state of temperature rise caused by an external short or the like by making a function for serving as a battery lost.

Another object of the present invention is to provide a battery diaphragm and a battery, which can ensure safety in an abnormal state also after long-term preservation.

A battery diaphragm according to the present invention includes a hydrophilized polymer porous body and polymer particles having a melting point of 80 to 170°C including ethylene copolymer particles having side chains, and the polymer particles are carried on the polymer porous body.

Throughout the specification, the "side chains" indicate carbon chains which are branched from a principal chain in a chain compound, and include all carbon chains having a carbon number of at least 2, in addition to carbon chains having a carbon number of 1 such as those of a methyl group and a carboxyl group, for example.

Preferably, the particle size of the polymer particles is in excess of the pore size of the hydrophilized porous body, and the polymer particles are carried on the polymer porous body in a thickness of at least 5 µm.

Preferably, the pore size of the hydrophilized polymer porous body is at least 0.01 µm.

Preferably, the ethylene copolymer is an ethylene-acrylic acid copolymer.

Preferably, the ethylene copolymer is an ethylene-α olefin copolymer.

Preferably, the polymer porous body is a tetrafluoroethylene drawn film.

The battery diaphragm according to the present invention preferably includes a hydrophilized tetrafluoroethylene drawn film, and polymer particles including ethylene-acrylic acid copolymer particles which are carried on this film.

Further, the battery diaphragm according to the present invention preferably includes a hydrophilized tetrafluoroethylene drawn film, and polymer particles including ethylene-α olefin copolymer particles which are carried on this film.

Preferably, a bridgeable compound is contained on the polymer particles, between the polymer particles or in the polymer particles.

The bridgeable compound can be prepared from a peroxide, an azo compound, an amine, an imidazole, an isocyanate or the like, for example.

Preferably, the hydrophilized polymer porous body is obtained by fixing a hydrophilic polymer to a porous film by graft polymerization or coating.

A battery according to the present invention is a battery which is formed by a positive electrode, a negative electrode and a diaphragm, and the diaphragm preferably includes a hydrophilized tetrafluoroethylene drawn film, and polymer particles including ethylene-acrylic acid copolymer particles which are carried on this film.

Further, the battery according to the present invention is a battery which is formed by a positive electrode, a negative electrode and a diaphragm, and the diaphragm preferably includes a hydrophilized tetrafluoroethylene drawn film, and polymer particles including ethylene-α olefin copolymer particles which are carried on this film.

In the battery employing the inventive diaphragm, pores of the porous film are blocked by melting of the carried particles in an abnormal state of temperature rise caused by an external short or the like. Thus, ion permeability between the positive electrode and the negative electrode is lost and the battery loses its function.

According to the present invention, particles of an ethylene copolymer including side chains are carried on a hydrophilized polymer porous body. The inventors have discovered that a battery employing such a diaphragm has low internal resistance, withstands severe charge/discharge, and is excellent in preservation property in normal employment, while having high certainty in insulation for blocking pores of the polymer porous body and excellent stability over time after insulation in an abnormal state of an overcharge or an external short, whereby extremely excellent results are obtained in both of battery performance and safety performance.

When the battery diaphragm according to the present invention is heated in an abnormal state of an overcharge or external short, the carried particles are melted and flow to block the pores of the hydrophilized polymer porous body, thereby insulating the diaphragm. In the battery, therefore, permeability for ions of the electrolyte is lost. Further, the ethylene copolymer including side chains safely continues the blocked states of the pores of the hydrophilized polymer porous body after the diaphragm according to the present invention is insulated, whereby it is possible to reliably ensure safety also in an abnormal state such as an external short continuing a relatively high temperature.

Further, the diaphragm containing a bridgeable compound on the polymer particles, between the polymer particles or in the polymer particles can be bridged and solidified after the battery temperature is increased and the particles are melted to block the pores of the polymer porous body in an abnormal state, to prevent further flow. Consequently, insulation of the diaphragm is further stabilized in a high temperature state, whereby safety can be more reliably ensured.

According to the present invention, homopolymer particles and copolymer particles having different molecular weights can be simultaneously employed at need.

The polymer porous body is not particularly restricted in the present invention, while the same can be prepared from a fine porous film having a network structure obtained by uniaxial orientation or biaxial orientation, for example.

Further, the material for the porous body can be prepared from polybutene, polyvinyl chloride, polyethylene terephthalate, nylon, polychlorotrifluoroethylene, polyvinylidene fluoride, polytetrafluoroethylene or the like, or a mixture or a copolymer thereof. In particular, a drawn film of polytetrafluoroethylene according to the present invention is that consisting of fibril of high crystallinity and having homogeneous morphology, in which the pore size or porosity is changed in the direction of thickness and knots of the fibril have long shapes in the direction of thickness, or the like.

Further, it is preferable that the porosity of the porous body is at least 30 %. This is because preservability of the electrolyte is so reduced that internal resistance is increased to reduce battery performance if the porosity is too small. If the porosity is too large, on the other hand, strength of the porous body is so reduced that the diaphragm is not suitable for practical application. However, the upper limit of the porosity of the porous body cannot be univocally determined since strength of the polymer porous body is varied with the material therefor.

Further, energy density is increased as the film thickness of the polymer porous body is reduced since the electrode quantity can be increased in the battery of the same volume. Therefore, it is preferable that the film thickness of the porous body is not more than 50 µm. If the film thickness is too small, on the other hand, the diaphragm is not suitable for practical application since mechanical strength is disadvantageously reduced. However, the lower limit of the film thickness cannot be determined since strength of the porous body is varied with the material therefor.

Further, the pore size of the polymer porous body is preferably at least 0.01 µm. This is because internal resistance of the battery is so increased that a battery having excellent performance cannot be attained if the pore size is too small. On the other hand, the upper limit of the pore size of the diaphragm must be of a size causing no short of materials forming the positive electrode and the negative electrode. However, the material forming the positive electrode is prepared from LiNiO₂, LiMnO₂, MnO₂, V₂O₅, TiS₂, graphite fluoride or nickel oxyhydroxide in addition to LiCoO₂ or polyaniline, while the material for the negative electrode is prepared from polyacene, Li metal, CdO or a hydrogen absorbing alloy in addition to carbon or an Li-Al alloy, and types thereof are over a wide range. Further, the shapes and sizes thereof cannot be specified. Thus, the upper limit of the pore size of the diaphragm cannot be specified.

In the present invention, the polymer porous body is hydrophilized. The method of hydrophilization of the porous body is not particularly restricted, but discharge treatment, treatment with a surface active agent, or fixation of a hydrophilic polymer to the polymer porous body by graft polymerization or coating is effective.

The discharge treatment is not particularly restricted, but plasma discharge treatment, corona discharge treatment, electron beam irradiation or gamma irradiation may be employed and it is possible to provide a hydrophilic functional group such as a carboxyl group or an amino group on the surface of the porous film.

The surface active agent is not particularly restricted, but an anion surface active agent (such as fatty acid soap, alkylbenzene sulfonate, alkylallyl sulfonate, alkylnaphthalene sulfonate or the like, for example), a cation surface active agent (such as alkylamine salt, amide linkage amine salt, ester linkage amine salt, alkylammonium salt, amide linkage ammonium salt, ester linkage ammonium salt, ether linkage ammonium salt, alkyl Pyridinium salt or ester linkage Pyridinium salt, for example), an amphoteric surface active agent (such as long-chain alkylamino acid, for example), or a nonionic surface active agent (such as alkylallyl ether, alkylether, alkylamine fatty acid glycerol ester, anhydrosorbitol fatty acid ester or polyoxyethylene fatty acid amide, for example) is effective.

A method of fixing a hydrophilic polymer to the polymer porous body by graft polymerization is not particularly restricted, but a method of impregnating the porous body in a water-soluble polymer (such as polyacrylic acid, polymethacrylic acid, polyvinyl alcohol or polyethylene imine, for example) and introducing a crosslinking agent (such as benzoyl peroxide, diazoaminobenzene, azochloroamide, azobisisobutyl nitrile, a halogen compound, formaldehyde, thiouric acid or isocyanate, for example), or a method of applying ionizing radiation (such as electron beam or gamma ray).

A method of coating a hydrophilic polymer is as follows:

The hydrophilic polymer is dissolved in a solvent in which the polymer porous body is insoluble and hydrophilic resin is soluble, and the polymer porous body is impregnated therein and thereafter dried to deposit the hydrophilic polymer on the surface of the polymer porous body. The hydrophilic polymer is not particularly restricted, but a copolymer of polyethylene and polyvinyl alcohol, or that prepared by introducing a sulfonic group thereinto is preferable. The solvent in which the polymer porous body is insoluble and the hydrophilic resin is soluble is not particularly restricted, but the same may be prepared from a mixed solution of water and propyl alcohol, for example.

The porous body is hardly provided in its interior with the hydrophilic functional group in the discharge treatment, among these hydrophilization methods. In the surface active agent treatment, chemical change may be caused particularly by long-term preservation of the battery, to deteriorate the battery performance. Therefore, the hydrophilization by fixation of the hydrophilic polymer to the polymer porous body is preferably employed.

In the present invention, the ethylene copolymer having side chains is not particularly restricted, but the same may be prepared from ethylene-ethyl acrylate (EEA), an ethylene-vinyl acetate copolymer (EVA), an ethylene-propylene copolymer (EPR), an ethylene-butene copolymer, an ethylene-isobutylene copolymer, an ethylene-dimethylpentene-1 copolymer, an ethylene-styrol copolymer, an ethylene-ester acrylate copolymer, an ethylene-vinyl alcohol copolymer or the like.

It is necessary to insulate the inventive diaphragm at 80 to 170°C. This is because ordinary employment and preservation of the inventive battery are carried out in environment of not more than 80°C and it is necessary to improve safety by preventing the battery from reaching 180°C, which is the melting point of lithium metal, in an abnormal state.

According to the present invention, further, a method of carrying the particles on the porous film is not particularly restricted, but a filtering method or a method of applying the same with a bar coater or a roll, or a method of bringing the same into a state of woven fabric or nonwoven fabric for lamination. Surfaces of the particles which are carried on the film may be provided on a positive electrode side, a negative electrode side or both sides in case of forming a battery. As to the amount of carrying, the particles are preferably carried in a thickness of at least 5 µm, in order to attain stable insulation performance. If the amount of carrying is too large, however, internal resistance of the battery employing this diaphragm is unpreferably increased.

In the present invention, further, the particle size of the ethylene copolymer particles must be in excess of the pore size of the hydrophilized polymer porous body. Otherwise the particles penetrate into the interior of the polymer porous body to reduce porosity of the polymer porous body, or the carried particles are dispersed to make blocking of the pores incomplete. As the particle size is increased, voids are so increased that internal resistance can be reduced particularly in the case of an organic electrolyte. The upper limit of the particle size is a value capable of implementing blocking of the polymer porous body, while the value cannot be specified since the same depends on the thickness of the polymer particles as carried and the material of the particles.

In the present invention, the type of battery is not particularly restricted, but a primary or secondary battery such as an alkaline manganese battery, a nickel-cadmium battery, a nickel-hydrogen battery, a lithium battery, a lithium ion battery or a polymer battery can be employed, for example.

The present invention is now described with reference to Examples, the battery diaphragm and the battery according to the present invention are not restricted to the following Examples.

### Brief Description of the Drawings

Fig. 1 is a sectional view showing a schematic structure of a battery diaphragm according to the present invention.

Fig. 2 is a sectional view showing a schematic structure of an example of a battery consisting of a positive electrode, a negative electrode and a diaphragm.

Fig. 3 is a sectional view showing a schematic structure of another example of a battery consisting of a positive electrode, a negative electrode and a diaphragm.

Fig. 4 a photograph by an electron microscope showing a battery diaphragm according to Example 9 which was heated at 180°C for 10 minutes.

Fig. 5 a photograph by an electron microscope showing a battery diaphragm according to comparative example 6 which was heated at 180°C for 10 minutes.

Fig. 6 a photograph by an electron microscope showing a battery diaphragm according to comparative example 8 which was heated at 180°C for 10 minutes.

### Best Modes for Carrying Out the Invention

### (Example 1)

First, a network polytetrafluoroethylene drawn film (POREFLON by Sumitomo Electric Industries, Ltd., 0.2 µm in pore size, 80 % in porosity and 40 µm in film thickness) was hydrophilized in a polyacrylic acid aqueous solution by electron beam irradiation treatment, to be converted to a porous film. Then, this polytetrafluoroethylene drawn film which was converted to a porous film was employed to filter a 5 % dilute solution of ethylene-vinyl acetate copolymer dispersion (CHEMIPEARL by Mitsui Petrochemical Industries, Ltd.). The polytetrafluoroethylene drawn film was made to carry ethylene-vinyl acetate copolymer particles at a rate of 50 mg/m² by this filtering, and thereafter dried to prepare a battery diaphragm.

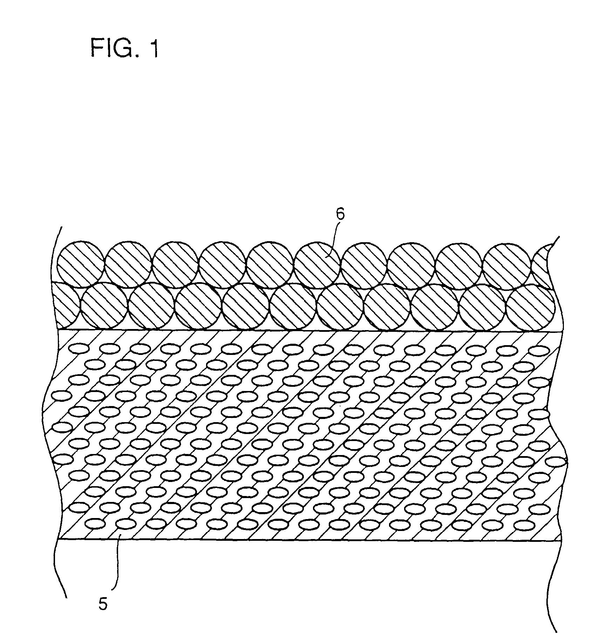

Fig. 1 is a sectional view showing a schematic structure of the battery diaphragm thus obtained.

Referring to Fig. 1, this diaphragm includes a tetrafluoroethylene drawn film 5, and ethylene-vinyl acetate copolymer dispersion 6 carried on this film 5.

Air permeability of the battery diaphragm thus obtained was measured. On the assumption of an accident such as an external short, air permeability was measured after this battery diaphragm was heat treated in a thermostat of 120°. Table 1 shows these results.

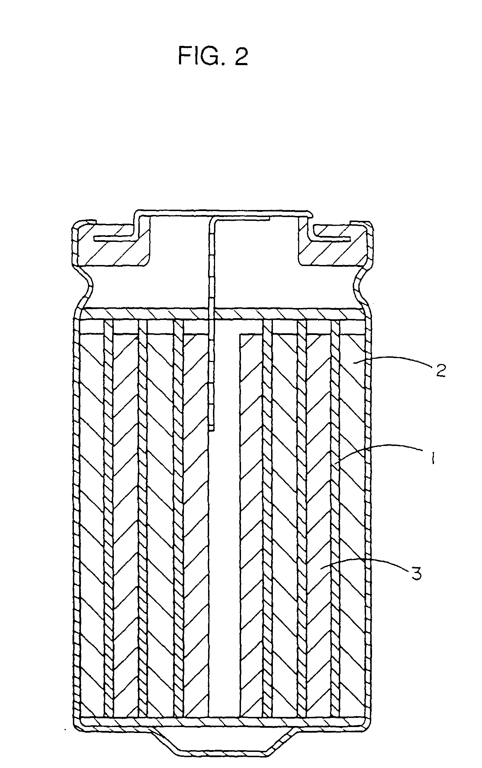

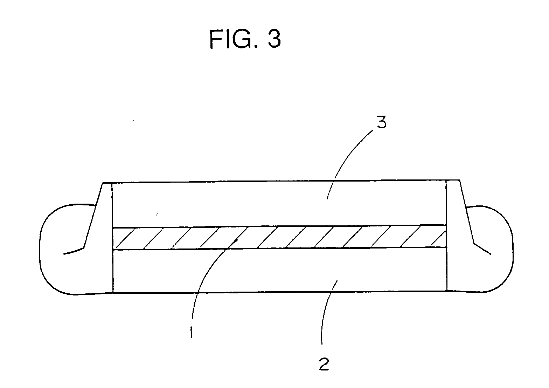

As shown in Fig. 2 or Fig. 3, a battery diaphragm 1 not yet heat treated was employed to form a battery having a positive electrode 2 of polyaniline and a negative electrode 3 of an Li-Al alloy. The battery diaphragm 1 was impregnated with 1 mol/l of LiBF₄/propylene carbonate as an electrolyte.

As to this battery, charge/discharge characteristics were measured in a voltage range of 2.7 to 4.1 V at current density of 1 mA/cm². Table 2 shows an internal resistance value and energy efficiency in this case.

### (Example 2)

Ethylene-acrylic acid copolymer dispersion (FLO-BEADS by Sumitomo Seika Chemicals Co., Ltd.) was employed to make a network polytetrafluoroethylene drawn film (POREFLON by Sumitomo Electric Industries, Ltd.) carry 50 mg/m² of ethylene-acrylic acid copolymer particles in a method similar to that of Example 1, and thereafter the film was dried to prepare a battery diaphragm.

Air permeability of the battery diaphragm thus obtained was measured. On the assumption of an accident such as an external short, air permeability was measured after this battery diaphragm was heat treated in a thermostat of 120°C. Table 1 shows these results.

Further, a battery diaphragm not yet heat treated was employed to form a battery similarly to Example 1, and its charge/discharge characteristics were measured. Table 2 shows an internal resistance value and energy efficiency in this case.

### (Comparative Example 1)

Polyethylene dispersion (CHEMIPEARL by Sumitomo Seika Chemicals Co., Ltd.) was employed to make a network polytetrafluoroethylene drawn film (POREFLON by Sumitomo Electric Industries, Ltd.) carry 50 mg/m² of polyethylene particles in a method similar to that of Example 1, and thereafter the film was dried to prepare a battery diaphragm.

Air permeability of the battery diaphragm thus obtained was measured. On the assumption of an accident such as an external short, air permeability was measured after this battery diaphragm was heat treated in a thermostat of 120°C. Table 1 shows these results.

Further, a battery diaphragm not yet heat treated was employed to form a battery similarly to Example 1, and its charge/discharge characteristics were measured. Table 2 shows an internal resistance value and energy efficiency in this case.

**Table 1**

| Diaphragm | Air Permeability (sec.) | |
|---|---|---|
| | Not Yet Heat Treated | After Heat Treatment |
| Example 1 | 11 | ∞ |
| Example 2 | 11 | ∞ |
| Comparative Example 1 | 12 | 5000 |

**Table 2**

| Battery | Internal Resistance (Ω) | Energy Efficiency (%) |
|---|---|---|
| Example 1 | 77 | 98 |
| Example 2 | 78 | 97 |
| Comparative Example 1 | 112 | 91 |

As obvious from Table 1 and Table 2, it is understood by comparing the results of Example 1, Example 2 and comparative example 1 that the batteries of Example 1 and Example 2 employing the battery diaphragms carrying the particles of low melting point polymers having hydrophilic groups are lower in internal resistance and higher in energy efficiency as compared with the battery of comparative example 1.

### (Example 3)

When the battery of Example 1 was shorted, heat generation was suppressed and the temperature was reduced after reaching 80°C.

### (Example 4)

When the battery of Example 2 was shorted, heat generation was suppressed and the temperature was reduced after reaching 100°C.

### (Comparative Example 2)

When the battery of comparative example 1 was shorted, heat generation was not suppressed and the temperature was not reduced after reaching 120°C.

From the results of Example 3, Example 4 and comparative example 2, it is understood that a battery employing the inventive battery diaphragm has excellent safety, due to high reliability in blocking of pores of a porous film by melting of a low melting point polymer.

### (Example 5)

First, a network polytetrafluoroethylene drawn film (POREFLON by Sumitomo Electric Industries, Ltd., 0.2 µm in pore size, 80 % in porosity and 40 µm in film thickness) was hydrophilized in a polyacrylic acid aqueous solution by electron beam irradiation treatment, to be converted to a porous film. Then, this polytetrafluoroethylene drawn film which was converted to a porous film was employed to filter ethylene-α olefin copolymer dispersion (CHEMIPEARL A100 by Mitsui Petrochemical Industries, Ltd.). Thereafter resin solids were vacuum-dried, and resin powder as obtained was press-molded into a sheet.

The sheet thus obtained was dipped in propylene carbonate (PC), ethylene carbonate (EC), diethyl carbonate (DEC) and 1,2-dimethoxyethane (DME), to carry out a gelation test of 60°C and 72 hours as an acceleration test on the assumption of long-term preservation. Table 3 shows the results.

### (Comparative Example 3)

Polyethylene dispersion (CHEMIPEARL by Mitsui Petrochemical Industries, Ltd.) was employed to prepare a sheet in a method similar to that in Example 5, and a gelation test was similarly carried out on the as-obtained sheet. Table 3 shows the results.

**Table 3**

| Resin | PC | EC | DEC | DME |
|---|---|---|---|---|
| Example 5 | ⓞ | ⓞ | ○ | ○ |
| Comparative Example 3 | Δ | Δ | × | × |
| ⓞ: weight unchanged ○:weight reduction not more than 5 % Δ : weight reduction not more than 10% ×:weight reduction at least 10% | | | | |

As obvious from Table 3, it is understood that the sheet of Example 5 employing a polymer having a bridged structure is superior in electrolyte resistance as compared with the sheet of comparative example 3.

### (Example 6)

First, a network polytetrafluoroethylene drawn film (POREFLON by Sumitomo Electric Industries, Ltd., 0.2 µm in pore size, 80 % in porosity and 40 µm in film thickness) was hydrophilized in a polyacrylic acid aqueous solution by electron beam irradiation treatment, to be converted to a porous film. Then, this polytetrafluoroethylene drawn film which was converted to a porous film was employed to filter a 5 % dilute solution of ethylene-α olefin copolymer dispersion (polyolefin elastomer dispersion) (CHEMIPEARL A100 by Mitsui Petrochemical Industries, Ltd.). The polytetrafluoroethylene drawn film was made to carry ethylene-α olefin copolymer (polyolefin elastomer) particles at a rate of 50 mg/m² by this filtering, and thereafter dried to prepare a battery diaphragm. Air permeability of the battery diaphragm thus obtained was measured. On the assumption of an accident such as an external short, air permeability of this battery diaphragm was measured in a thermostat of 120°. Table 4 shows these results.

As shown in Fig. 1, a battery diaphragm 1 not yet heat treated was employed to form a battery having a positive electrode 2 of polyaniline and a negative electrode 3 of an Li-Al alloy. The battery diaphragm 1 was impregnated with 1 mol/l of LiBF₄/propylene carbonate as an electrolyte.

After this battery was preserved in a thermostat of 60°C for 72 hours, charge/discharge characteristics were measured in a voltage range of 2.7 to 4.1 V at current density of 1 mA/cm². Table 5 shows an internal resistance value and energy efficiency in this case.

### (Comparative Example 4)

A network polytetrafluoroethylene drawn film (POREFLON by Sumitomo Electric Industries, Ltd.) was made to carry 50 mg/m² of polyethylene particles through polyethylene dispersion (CHEMIPEARL M200 by Mitsui Petrochemical Industries, Ltd.) in a method similar to that of Example 6, and thereafter dried to prepare a battery diaphragm.

Air permeability of the battery diaphragm thus obtained was measured. On the assumption of an accident such as an external short, air permeability was measured after this battery diaphragm was heat treated in a thermostat of 120°. Table 4 shows these results.

Further, a battery diaphragm not yet heat treated was employed to form a battery similarly to Example 6. After this battery was preserved in a thermostat of 60°C for 72 hours, charge/discharge characteristics were similarly measured. Table 5 shows an internal resistance value and energy efficiency in this case.

**Table 4**

| Diaphragm | Air Permeability (sec.) | |
|---|---|---|
| | Not Yet Heat Treated | After Heat Treatment |
| Example 6 | 11 | ∞ |
| Comparative Example 4 | 12 | 5000 |

**Table 5**

| Battery | Internal Resistance (Ω) | Energy Efficiency (%) |
|---|---|---|
| Example 6 | 77 | 98 |
| Comparative Example 4 | 132 | 81 |

As obvious from Tables 4 and 5, it is understood by comparing the results of Example 6 and comparative example 4 that the battery of Example 6 employing the diaphragm carrying particles of an ethylene copolymer having side chains has low internal resistance and high energy efficiency also after the preservation test, as compared with the battery of comparative example 4.

### (Example 7)

When the battery of Example 6 was shorted, heat generation was suppressed and the temperature was reduced after reaching 85°C.

### (Comparative Example 5)

When the battery of comparative example 4 was shorted, the temperature was not reduced for 10 minutes after reaching 120°C.

From the results of Example 7 and comparative example 5, it is understood that only the battery carrying particles of an ethylene copolymer having side chains maintains superior safety by excellent electrolyte resistance after an acceleration test assuming long-term preservation.

### (Example 8)

First, a network polytetrafluoroethylene drawn film (POREFLON (registered trademark) by Sumitomo Electric Industries, Ltd., 0.1 µm in pore size, 80 % in porosity and 25 µm in film thickness) was hydrophilized in a polyvinyl alcohol aqueous solution by electron beam irradiation treatment, to prepare a porous film. Then, this porous film was coated with ethylene-acrylic acid copolymer dispersion (FLO-BEADS (registered trademark) EA209 by Sumitomo Seika Chemicals Co., Ltd.) and thereafter dried, to prepare a battery diaphragm. The thickness of the diaphragm as dried was 35 µm.

### (Example 9)

In place of ethylene-acrylic acid copolymer dispersion, ethylene-α olefin copolymer dispersion (polyolefin elastomer dispersion) (CHEMIPEARL (registered trademark) A100 by Mitsui Petrochemical Industries, Ltd.) was employed to prepare a battery diaphragm similarly to Example 8. Other conditions were absolutely similar to those of Example 8, and hence description thereof is omitted.

### (Example 10)

First, a network polytetrafluoroethylene drawn film (POREFLON (registered trademark) by Sumitomo Electric Industries, Ltd., 0.1 µm in pore size, 80 % in porosity and 25 µm in film thickness) was dipped in a 1 % water and propyl alcohol mixed solution of a copolymer of polyethylene and polyvinyl alcohol (EVAL EP-F by Kuraray Co., Ltd.). Then, the dipped film was dried under the room temperature to form a hydrophilic resin layer, thereby hydrophilizing the porous film. Thereafter the hydrophilized porous film was coated with an ethylene-acrylic acid copolymer and thereafter dried similarly to Example 8, to prepare a battery diaphragm. The thickness of the diaphragm as dried was 35 µm.

### (Example 11)

First, a network polytetrafluoroethylene drawn film (POREFLON (registered trademark) by Sumitomo Electric Industries, Ltd., 0.1 µm in pore size, 80 % in porosity and 25 µm in film thickness) was hydrophilized in a polyvinyl alcohol aqueous solution by electron beam irradiation treatment, to prepare a porous film. Then, this porous film was coated with a mixture of ethylene-α olefin copolymer dispersion (polyolefin elastomer dispersion) (CHEMIPEARL (registered trademark) A100 by Mitsui Petrochemical Industries, Ltd.) and modified polypropylene dispersion ((registered trademark) UNISTOLE R100K by Mitsui Petrochemical Industries, Ltd.), and thereafter dried to prepare a battery diaphragm. The thickness of the diaphragm as dried was 35 µm. Further, the mixture contained the ethylene-α olefin copolymer and the modified polypropylene at a rate of 3:7 in a solid weight ratio.

### (Example 12)

First, a network polytetrafluoroethylene drawn film (POREFLON (registered trademark) by Sumitomo Electric Industries, Ltd., 0.1 µm in pore size, 80 % in porosity and 25 µm in film thickness) was hydrophilized in a polyvinyl alcohol aqueous solution by electron beam irradiation treatment, to prepare a porous film. Then, this porous film was coated with a mixture of ethylene-α olefin copolymer dispersion (CHEMIPEARL (registered trademark) A100 by Mitsui Petrochemical Industries, Ltd.) and dicumyl peroxide ((registered trademark) PERCUMYL D by Nippon Oil and Fats Co., Ltd.), and thereafter dried to prepare a battery diaphragm. The thickness of the diaphragm as dried was 35 µm.

### (Example 13)

Ethylene-α olefin copolymer dispersion, epoxy resin dispersion ((registered trademark) AQUATOHTO 3540 by TOHTO KASEI CO., LTD.) and 2-heptadecyl imidazole ((registered trademark) C17Z by Shikoku Chemicals Corporation) for hardening epoxy resin were employed to prepare a battery diaphragm similarly to Example 12. Other conditions were absolutely identical to those of Example 12, and hence description thereof is omitted.

### (Comparative Example 6)

Polyethylene dispersion (CHEMIPEARL (registered trademark) M200 by Mitsui Petrochemical Industries, Ltd.) was employed in place of ethylene-acrylic acid copolymer dispersion, to prepare a battery diaphragm which was similar to Example 8. Other conditions were absolutely identical to those of Example 8, and hence description thereof is omitted.

### (Comparative Example 7)

A network tetrafluoroethylene drawn film (POREFLON (registered trademark) by Sumitomo Electric Industries, Ltd., 0.1 µm in pore size, 80 % in porosity and 25 µm in film thickness) which was not hydrophilized was employed to carry ethylene-acrylic acid copolymer particles similarly to Example 8, to prepare a battery diaphragm. Other conditions were absolutely identical to those of Example 8, and hence description thereof is omitted.

### (Comparative Example 8)

A network tetrafluoroethylene drawn film (POREFLON (registered trademark) by Sumitomo Electric Industries, Ltd., 0.1 µm in pore size, 80 % in porosity and 25 µm in film thickness) which was not hydrophilized was employed to carry ethylene-α olefin copolymer particles similarly to Example 9, to prepare a battery diaphragm. Other conditions were absolutely identical to those of Example 9, and hence description thereof is omitted.

### (Comparative Example 9)

A polypropylene porous film (CELGARD (registered trademark) 2400 by HOECHST CELANESE CO., LTD., 25 µm in thickness, 0.05 µm in pore size and 38 % in porosity) was converted to a battery diaphragm.

The battery diaphragms of Examples 8 to 13 and comparative examples 6 to 9 prepared in the aforementioned manners were employed to prepare batteries, and boosting charge/discharge characteristics, preservation characteristics, safety with respect to overcharges and external shorts were examined. The results are now described.

### (Example 14)

The battery diaphragm of Example 8 was employed to form a battery having a positive electrode of polyaniline, a negative electrode of an Li-Al alloy and an electrolyte of 1 mol/l of LiBF₄/propylene carbonate.

### (Example 15)

The battery diaphragm of Example 9 was employed, to prepare a battery similarly to Example 14.

### (Comparative Example 10)

The battery diaphragm of comparative example 9 was employed, to prepare a battery similarly to Example 14.

As to the batteries of Examples 14 and 15 and comparative example 10 thus obtained, boosting charge/discharge characteristics were measured in a voltage range of 2.7 to 4.1 V at current density of 5 mA/cm². Table 6 shows discharge times in this case.

**Table 6**

| Battery | Diaphragm | Discharge Time (min.) |
|---|---|---|
| Example 14 | Example 8 | 11.8 |
| Example 15 | Example 9 | 11.9 |
| Comparative Example 10 | Comparative Example 9 | 4.3 |

As obvious from Table 6, it is understood that the batteries of Example 14 and Example 15 have battery characteristics withstanding severe employment with low internal resistance values and long discharge times in boosting charge/discharge, as compared with the battery of comparative example 10.

### (Example 16)

The battery diaphragm of Example 8 was employed to prepare an SC size lithium ion battery having a positive electrode of LiCoO₂, a negative electrode of carbon and an electrolyte prepared by dissolving LiPF₆ in a 1:1 mixed solution of ethylene carbonate and diethylene carbonate.

### (Example 17)

The battery diaphragm of Example 9 was employed, to prepare a lithium ion battery similarly to Example 16.

### (Example 18)

The battery diaphragm of Example 10 was employed, to prepare a lithium ion battery similarly to Example 16.

### (Example 19)

The battery diaphragm of Example 11 was employed, to prepare a lithium ion battery similarly to Example 16.

### (Example 20)

The battery diaphragm of Example 12 was employed, to prepare a lithium ion battery similarly to Example 16.

### (Example 21)

The battery diaphragm of Example 13 was employed, to prepare a lithium ion battery similarly to Example 16.

### (Comparative Example 11)

The battery diaphragm of comparative example 6 was employed, to prepare a lithium ion battery similarly to Example 16.

### (Comparative Example 12)

The battery diaphragm of comparative example 7 was employed, to prepare a lithium ion battery similarly to Example 16.

### (Comparative Example 13)

The battery diaphragm of comparative example 8 was employed, to prepare a lithium ion battery similarly to Example 16.

### (Comparative Example 14)

The battery diaphragm of comparative example 9 was employed, to prepare a lithium ion battery similarly to Example 16.

As to the lithium ion batteries of Examples 16 to 21 and comparative examples 11 to 14 thus obtained, preservation characteristics were examined as follows:

First, a cycle test of charging each lithium ion battery to reach 4.1 V at current density of 0.4 mA/cm² as to the electrode area and thereafter discharging the same to 2.7 V at the same current density was carried out to measure the capacity at the third cycle. Then, this was preserved in a thermostat at 60°C for 1 month, and thereafter the capacity was again measured by similar charge/discharge. Table 7 shows battery capacities of the respective batteries before and after the preservation test.

**Table 7**

| Battery | Diaphragm | Initial Capacity (mAh) | Preservation Capacity (mAh) |
|---|---|---|---|
| Example 16 | Example 8 | 710 | 705 |
| Example 17 | Example 9 | 715 | 706 |
| Example 18 | Example 10 | 712 | 710 |
| Comparative Example 11 | Comparative Example 6 | 713 | 651 |

As obvious from Table 7, the batteries of Examples 16 to 18 employing the battery diaphragms of Examples 8 to 10 in which particles of ethylene copolymers containing side chains were carried on hydrophilized polymer porous bodies were not capacity-deteriorated in the aforementioned preservation test. On the other hand, the battery of comparative example 11 employing the diaphragm of comparative example 6 was capacity-deteriorated.

As to the battery diaphragms of Examples 8 and 9 and comparative example 6, an acceleration test assuming long-term preservation was carried out as follows:

First, respective particles of the ethylene-acrylic acid copolymer, the ethylene-α olefin copolymer and polyethylene were taken out from the diaphragms of Examples 8 and 9 and comparative example 6, and pressed into the form of pellets. Then, these pellets were dipped in propylene carbonate (PC), ethylene carbonate (EC), diethyl carbonate (DEC) and 1,2-dimethyoxyethane (DME) at 70°C for 72 hours, to carry out a gelation test. Table 8 shows the results.

**Table 8**

| | PC | EC | DEC | DME |
|---|---|---|---|---|
| Ethylene-Acrylic Acid Copolymer | ⓞ | ⓞ | ○ | ○ |
| Ethylene-α Olefin Copolymer | ⓞ | ⓞ | ○ | ○ |
| Polyethylene | ○ | ○ | Δ | × |
| ⓞ: weight unchanged ○: weight reduction not more than 5% Δ: weight reduction not more than 10% ×: weight reduction at least 10% | | | | |

As obvious from Table 8, it is understood that the ethylene-acrylic acid copolymer and the ethylene-α olefin copolymer are superior in electrolyte resistance as compared with polyethylene.

Then, safety of each lithium ion battery with respect to an overcharge was examined as follows:

The lithium ion batteries of Examples 16 to 21 and comparative examples 11 and 14 employing the diaphragms of Examples 8 to 13 and comparative examples 6 and 9 were subjected to an overcharge test of charging the same at 1.4 A respectively. Table 9 shows the results. Those in which temperatures in the batteries reached 170°C at least once are shown with marks X, and those being cooled without reaching 170°C are shown with marks O.

**Table 9**

| Battery | Diaphragm | Result of Overcharge Test |
|---|---|---|
| Example 16 | Example 8 | ○ |
| Example 17 | Example 9 | ○ |
| Example 18 | Example 10 | ○ |
| Example 19 | Example 11 | ○ |
| Example 20 | Example 12 | ○ |
| Example 21 | Example 13 | ○ |
| Comparative Example 11 | Comparative Example 6 | × |
| Comparative Example 14 | Comparative Example 9 | × |

As obvious from Table 9, it is understood that the diaphragms of Examples 8 to 13 are insulated due to heating by overcharges to ensure safety of the batteries with respect to the overcharge, while such functions are insufficient in the diaphragms of comparative examples 6 and 9.

Then, an external short test was carried out with respect to the lithium ion batteries of Examples 16 to 21 and comparative examples 11 to 14 employing the diaphragms of Examples 8 to 13 and comparative examples 6 to 9.

As the result, a current of about 20 A flew immediately after a short and the internal temperature of the battery reached about 180°C after 1 minute upon a short in every battery. However, the batteries of Examples 16 to 21 employing the diaphragms of Examples 8 to 13 were thereafter monotonously cooled and no abnormality was observed in the batteries. In the batteries of comparative examples 11 to 14 employing the diaphragms of comparative examples 6 to 9, on the other hand, the internal temperatures of the batteries were cooled once but again repeated increase and decrease. In particular, the batteries of comparative examples 12, 13 and 14 caused electrolyte leakage.

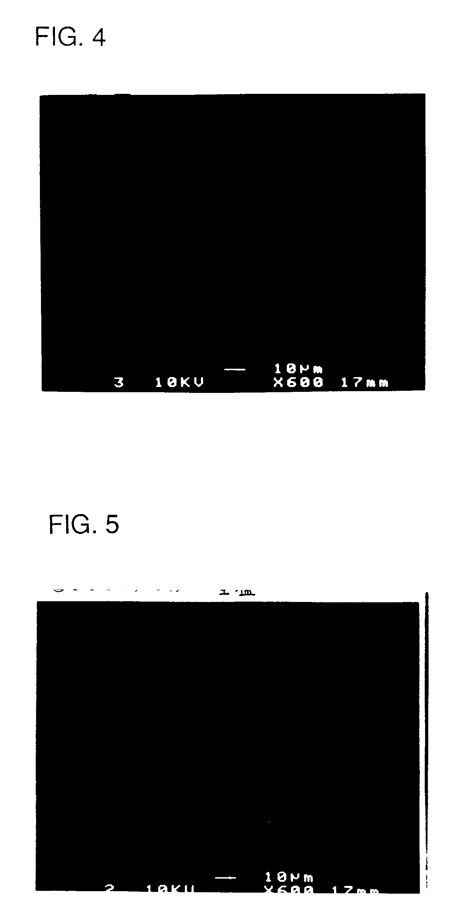

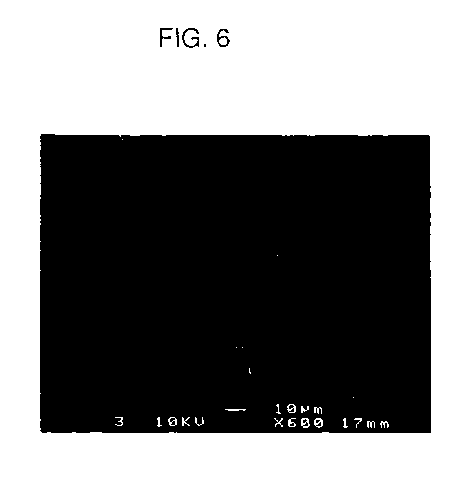

Then, the diaphragms of Example 9 and comparative examples 6 and 8 were heated in thermostats of 180°C for 10 minutes and cooled, to be thereafter subjected to air permeability measurement and electron microscope observation. Table 10 shows the results of air permeability measurement, and Figs. 4 to 6 show results of electron microscope observation.

**Table 10**

| Diaphragm | Air Permeability (JIS P8110-1980) |
|---|---|
| Example 9 | ∞ |
| Comparative Example 6 | 1000 |
| Comparative Example 8 | 5000 |

As obvious from Table 10 and Figs. 4 to 6, pores of the polymer porous body were completely blocked in the diaphragm of Example 9 which was employed in the battery of Example 17. On the other hand, it is understood that blocking of pores of the polymer porous bodies is incomplete in the diaphragms of comparative examples 6 and 8 which were employed in the batteries of comparative examples 11 and 13.

### Industrial Availability

As hereinabove described, the battery diaphragm and the battery according to the present invention can prevent a phenomenon such as leakage of an electrolyte to exhibit excellent safety in an abnormal state of temperature rise caused by an external short or the like, by making a function for serving as a battery lost.

## Claims

1. A battery diaphragm including:
a hydrophilized polymer porous body (5); and
polymer particles (6) having a melting point of 80 to 170°C, including ethylene copolymer particles having side chains,
said polymer particles (6) being carried on said polymer porous body (5).

2. A battery diaphragm in accordance with claim 1, wherein the particle size of said polymer particles (6) is in excess of the pore size of said hydrophilized porous body (5),
said polymer particles (6) being carried on said polymer porous body (5) in a thickness of at least 5 µm.

3. A battery diaphragm in accordance with claim 1, wherein the pore size of said hydrophilized polymer porous body (5) is at least 0.01 µm.

4. A battery diaphragm in accordance with claim 1, wherein said ethylene copolymer is an ethylene-acrylic acid copolymer.

5. A battery diaphragm in accordance with claim 1, wherein said ethylene copolymer is an ethylene-α olefin copolymer.

6. A battery diaphragm in accordance with claim 1, wherein said polymer porous body (5) is a polytetrafluoroethylene drawn film.

7. A battery diaphragm including:
a porous hydrophilized polytetrafluoroethylene drawn film (5); and
polymer particles (6) including ethylene-acrylic acid copolymer particles, being carried on said film (5).

8. A battery diaphragm including:
a porous hydrophilized polytetrafluoroethylene drawn film (5); and
polymer particles (6) including ethylene-α olefin copolymer particles, being carried on said film (5).

9. A battery diaphragm in accordance with claim 1, 7 or 8, further containing a bridgeable compound on said polymer particles (6), between said polymer particles (6) or in said polymer particles (6).

10. A battery diaphragm in accordance with claim 1, wherein said hydrophilized polymer porous body (5) is obtained by fixing a hydrophilic high polymer to a porous film by graft polymerization or coating.

11. A battery consisting of a positive electrode (2), a negative electrode (3) and a diaphragm (1),
said diaphragm (1) including:
a porous hydrophilized polytetrafluoroethylene drawn film (5); and
polymer particles (6) including ethylene-acrylic acid copolymer particles, being carried on said film (5).

12. A battery consisting of a positive electrode (2), a negative electrode (3) and a diaphragm (1),
said diaphragm (1) including:
a porous hydrophilized polytetrafluoroethylene drawn film (5); and
polymer particles (6) including ethylene-α olefin copolymer particles, being carried on said film (5).

## Patentansprüche

1. Batterie-Diaphragma mit:
einem hydrophilisierten polymeriden porösen Körper (5) und polymeriden Teilchen (6) mit einem Schmelzpunkt von 80 bis 170° C, die Teilchen aus einem Ethylen-Copolymer mit Seitenketten enthalten,
wobei die polymeriden Teilchen (6) auf dem polymeriden porösen Körper (5) gelagert sind.

2. Batterie-Diaphragma nach Anspruch 1, **dadurch gekennzeichnet, daß** die Partikelgröße der polymeriden Teilchen (6) die Porengröße des hydrophilisierten porösen Körpers (5) übersteigt, und die polymeriden Teilchen (6) auf dem polymeriden porösen Körper (5) in einer Dicke von mindestens 5 µm gelagert sind.

3. Batterie-Diaphragma nach Anspruch 1, **dadurch gekennzeichnet, daß** die Porengröße des hydrophilisierten polymeriden porösen Körpers (5) mindestens 0,01 µm ist.

4. Batterie-Diaphragma nach Anspruch 1, **dadurch gekennzeichnet, daß** das Ethylen-Copolymer ein Ethylen-Acrylsäure-Copolymer ist.

5. Batterie-Diaphragma nach Anspruch 1, **dadurch gekennzeichnet, daß** das Ethylen-Copolymer ein Ethylen-α-Olefin-Copolymer ist.

6. Batterie-Diaphragma nach Anspruch 1, **dadurch gekennzeichnet, daß** der polymeride poröse Körper (5) ein gezogener Film aus Polytetrafluorethylen ist.

7. Batterie-Diaphragma mit:
einem porösen hydrophilisierten Film (5) aus Polytetrafluorethylen und polymeriden Teilchen (6), die Teilchen aus einem Ethylen-Acrlysäure-Copolymer enthalten, die auf dem Film (5) gelagert sind.

8. Batterie-Diaphragma mit:
einem porösen hydrophilisierten gezogenen Film (5) aus Polytetrafluorethylen und
polymeriden Teilchen (6), die Teilchen aus einem Ethylen-α-Olefin-Copolymer enthalten, die auf dem Film (5) gelagert sind.

9. Batterie-Diaphragma nach einem der Ansprüche 1, 7 oder 8, welches ferner eine Brückenverbindung an den polymeriden Teilchen (6), zwischen den polymeriden Teilchen (6) oder in den polymeriden Teilchen (6) enthält.

10. Batterie-Diaphragma nach Anspruch 1, **dadurch gekennzeichnet, daß** der hydrophilisierte polymeride poröse Körper (5) durch die Fixierung eines hydrophiliserten Hochpolymers an einem porösen Film durch Kraftpolymerisation oder Beschichtung hergestellt ist.

11. Batterie bestehend aus einer positiven Elektrode (2), einer negativen Elektrode (3) und einem Diaphragma (1), wobei das Diaphragma (1) einen porösen hydrophilisierten gezogenen Film (5) aus Polytetrafluorethylen und polymeride Teilchen (6), die Teilchen aus einem Ethylen-Acrylsäure-Copolymer enthalten, die auf dem Film (5) gelagert sind, umfaßt.

12. Batterie bestehend aus einer positiven Elektrode (2), einer negativen Elektrode (3) und einem Diaphragma (1), wobei das Diaphragma (1) einen porösen hydrophilisierten gezogenen Film (5) aus Polytetrafluorethylen und polymeride Teilchen (6), die Teilchen aus einem Ethylen-α-Olefin-Copolymer enthalten, die auf dem Film (5) gelagert sind, aufweist.

## Revendications

1. Diaphragme de batterie comprenant :
- un corps (5) polymère poreux rendu hydrophile ;
- et des particules polymères (6) ayant un point de fusion de 80° à 170°C, incluant des particules de copolymère d'éthylène ayant des chaînes latérales,
lesdites particules polymères (6) étant supportées par ledit corps (5) poreux polymère.

2. Diaphragme de batterie selon la revendication 1, dans lequel la taille desdites particules polymères (6) dépasse la taille des pores dudit corps (5) poreux rendu hydrophile,
lesdites particules polymères (6) étant supportées par ledit corps (5) polymère poreux avec une épaisseur d'au moins 5 µm.

3. Diaphragme de batterie selon la revendication 1, dans lequel la taille des pores dudit corps (5) polymère poreux rendu hydrophile est au moins de 0,01 µm.

4. Diaphragme de batterie selon la revendication 1, dans lequel ledit copolymère d'éthylène est un copolymère d'éthylène - acide acrylique.

5. Diaphragme de batterie selon la revendication 1, dans lequel ledit copolymère d'éthylène est un copolymère d'éthylène - α-oléfine.

6. Diaphragme de batterie selon la revendication 1, dans lequel ledit corps (5) polymère poreux est un film étiré de polytétrafluoroéthylène.

7. Diaphragme de batterie comprenant :
- un film (5) étiré de polytétrafluoroéthylène poreux, rendu hydrophile ;
- et des particules polymères (6) incluant des particules de copolymère d'éthylène acide acrylique,supportées par ledit film (5).

8. Diaphragme de batterie comprenant :
- un film (5) étiré de polytétrafluoroéthylène poreux, rendu hydrophile ;
- et des particules polymères (6) incluant des particules de copolymère d'éthylène - α-oléfine, supportées par ledit film (5).

9. Diaphragme de batterie selon la revendication 1, 7 ou 8, contenant en outre, sur lesdites particules polymères (6), un composé capable de former des ponts entre lesdites particules polymères (6) ou au sein desdites particules polymères (6).

10. Diaphragme de batterie selon la revendication 1, dans lequel ledit corps (5) polymère poreux rendu hydrophile est obtenu en fixant un polymère de masse moléculaire élevée hydrophile sur un film poreux par polymérisation par greffage ou par enduction.

11. Batterie constituée d'une électrode positive (2), d'une électrode négative (3) et d'un diaphragme (1), ledit diaphragme (1) incluant :
- un film (5) étiré de polytétrafluoroéthylène poreux, rendu hydrophile ;
- et des particules polymères (6), incluant des particules de copolymère d'éthylène - acide acrylique, supportées par ledit film(5).

12. Batterie constituée d'une électrode positive (2), d'une électrode négative (3) et d'un diaphragme (1), ledit diaphragme (1) incluant :
- un film (5) étiré de polytétrafluoroéthylène poreux, rendu hydrophile ;
- et des particules polymères (6), incluant des particules de copolymère d'éthylène - α-oléfine, supportées par ledit film(5).
